# Europäisches Patentamt
# European Patent Office
# Office européen des brevets

(11) Publication number: **0 178 266**
**B1**

(12) **EUROPEAN PATENT SPECIFICATION**

(45) Date of publication of patent specification: **27.04.88**

(51) Int. Cl.⁴: **B 60 K 5/10**

(21) Application number: **85830239.1**

(22) Date of filing: **24.09.85**

(54) Motor vehicle including a preassembled subassembly formed by the power unit and a series of components of the systems of the vehicle.

(30) Priority: **01.10.84 IT 5387784 u**

(43) Date of publication of application:
**16.04.86 Bulletin 86/16**

(45) Publication of the grant of the patent:
**27.04.88 Bulletin 88/17**

(84) Designated Contracting States:
**DE FR GB SE**

(56) References cited:
**FR-A- 402 739**
**FR-A- 448 831**
**FR-A- 937 256**
**FR-A- 970 222**
**FR-A-2 219 870**

(73) Proprietor: **FIAT AUTO S.p.A.**
**Corso Giovanni Agnelli 200**
**I-10135 Torino (IT)**

(72) Inventor: **Villari, Marcello**
**Via Cervino 8/C**
**I-10044 Pianezza (Torino) (IT)**
Inventor: **Marcolin, Dario**
**Corso Torino 3/A**
**I-10095 Grugliasco (Torino) (IT)**

(74) Representative: **Notaro, Giancarlo et al**
**c/o Jacobacci-Casetta & Perani S.p.A. Via Alfieri, 17**
**I-10121 Torino (IT)**

Courier Press, Leamington Spa, England.

## Description

The present invention concerns motor vehicles, particularly of the type comprising a body, a power unit, a sub-frame supported by the body and carrying the power unit, and a series of members forming parts of the systems of the motor vehicle, among which is the radiator of the engine cooling system, said radiator being fixed to said sub-frame (FR—A—2 219 870).

In this specification and in the following claims, the expression "systems of the motor vehicle" is used to mean the various systems with which the motor vehicle is provided, such as, for example, the engine cooling system, the system for cooling the engine lubricating oil, the air-conditioning system for the passenger compartment of the motor vehicle, the engine supercharging system.

According to a technique already used by the Applicants, the power unit, that is, the engine together with the transmission (including the gearbox and, in the case of a motor vehicle with front-wheel drive, the front differential), is mounted separately on the sub-frame, after which the sub-assembly made up of the sub-frame and the power unit is installed in the body of the motor vehicle. Clearly, this technique allows the power unit to be assembled much more easily in that its assembly is not impeded by the presence of the body. At the same time, it is also possible to provide for automatic installation of the sub-assembly in the body of the vehicle.

According to the aforesaid prior art, the various components of the systems of the motor vehicle, such as, for example, the radiator of the engine cooling system, the heat exchanger for cooling the lubricating oil of the engine, the engine fan, the condensor of the air-conditioning system, etc., are installed in the body after the latter has received the subassembly made up of the power unit and sub-frame.

It is clear that, in order to allow even easier and quicker assembly of the various parts of the motor vehicle, it would be desirable for the members forming parts of the various systems of the motor vehicle also to be assembled on the sub-frame before it is fitted into the body, so as to constitute a single subassembly which can be fixed within the body of the motor vehicle in a single operation.

The object of the present invention is to provide a motor vehicle of the type specified above, which has a configuration and arrangement of parts such as to permit the said members of the systems of the motor vehicle to be preassembled on the sub-frame in a particularly easy, quick and practical manner.

The main characteristic of the invention lies in the fact that at least one of the remaining members of the motor vehicle systems are supported by the structure of the radiator.

According to a further characteristic, the sub-frame has a frame structure including a front cross member carrying the radiator of the engine cooling system, and the radiator has a pair of end manifolds each having a body with brackets or bosses for the fixing of the said members forming parts of the motor vehicle systems.

Further characteristics and advantages of the present invention will emerge from the description which follows with reference to the appended drawings, supplied purely by way of non-limiting example, in which:

Figure 1 is a side elevational view of a sub-assembly of a motor vehicle, made up of a sub-frame, power unit, and various members of the systems of the motor vehicle.

Figure 2 is an exploded perspective view of the subassembly illustrated in Figure 1, and

Figure 3 is a sectional view of a detail of Figure 1, on an enlarged scale.

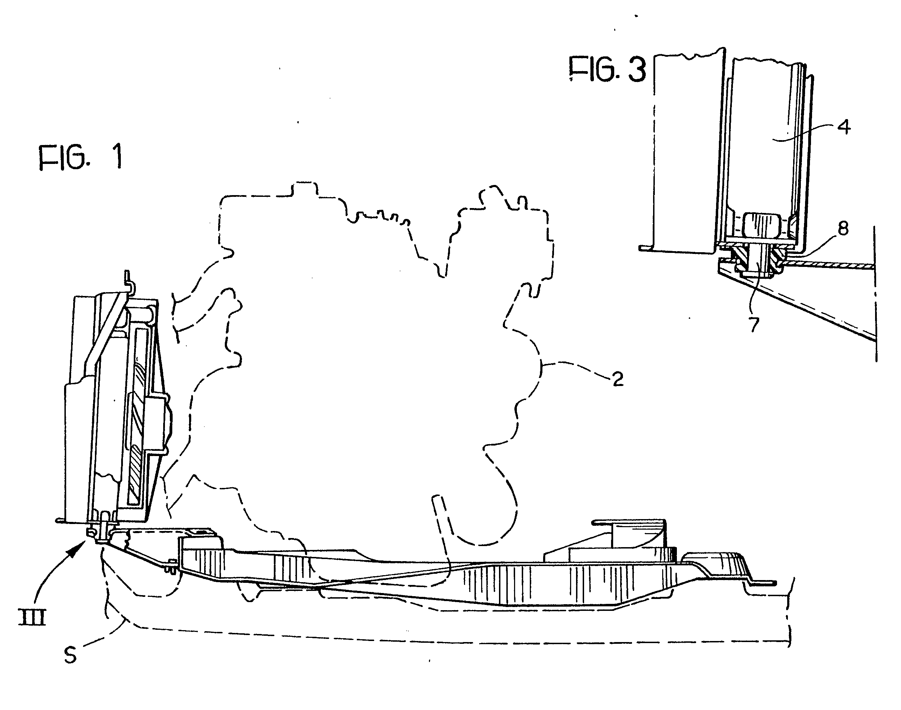

Reference numeral 1 indicates a sub-frame of pressed sheet metal on which the power unit 2 and various members of the motor vehicle systems are assembled so as to constitute a subassembly which is then installed in the body of the motor vehicle (indicated schematically S in Figure 1) in a single operation.

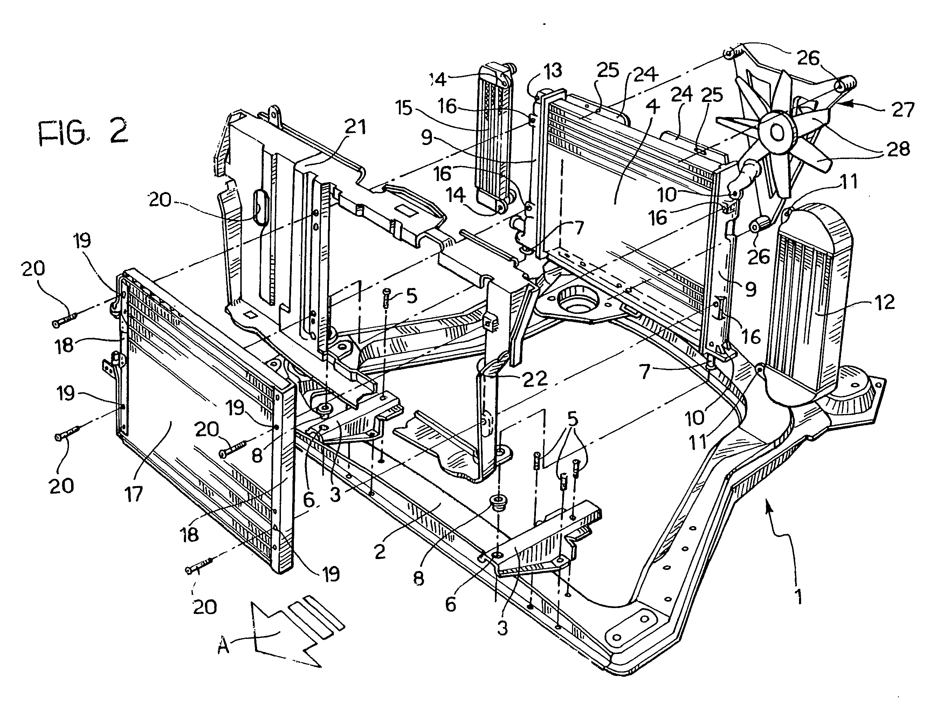

The sub-frame 1 has a front cross member 2 (with reference to the direction of travel of the motor vehicle, indicated by the arrow A in Figure 2) onto which are screwed two brackets 3 for supporting the radiator 4 of the engine cooling system. Each bracket 3 is screwed onto the front cross member 2 of the frame 1 by screws 5 and has, in correspondence with its front end which projects in a cantilever fashion from the cross member 2, a hole 6 engaged by a corresponding pin 7 at the lower end of the radiator 4, with the interposition of a rubber bush 8.

According to the present invention, the radiator 4 of the engine cooling system is used as a support element for the other members of the various systems of the motor vehicle. More particularly, the radiator 4 has two end manifolds 9 whose bodies are provided with brackets or bosses for the fixing of the aforesaid members.

Referring to the example illustrated in the drawings, one of the two end manifolds 9 of the radiator 4 has bosses 10 for the fixing of attachment brackets 11 provided on a heat exchange 12 which forms part of the supercharging system of the engine. Clearly, this component is present only in the case in which the motor vehicle is provided with an engine of the supercharged type.

Similarly, the other end manifold 9 of the radiator 4 is provided with bosses 13 (only one of which can be seen in Figure 2) for the fixing of attachment brackets 14 which form part of a heat exchanger 15 for cooling the lubricating oil of the engine.

The two end manifolds 9 are also provided with four bosses 16 for the fixing, directly in front of the radiator, of a condensor 17 which forms part of the conditioning system for the air fed into the passenger compartment of the motor vehicle. To this end, the condensor is provided with end heads 18 having holes 19 for the fixing screws 20. These fixing screws 20 can also be used to fix a partition 21, having openings 22, 23 for conveying the cooling air through the radiator 4 and the heat exchange 15, to the radiator 4 in a position between the latter and the condensor 17.

Finally, the radiator 4 has brackets 24 with holes 25 for fixing attachment appendages 26 provided on a structure 27 which supports rotatably the electric cooling fan 28 for the radiator.

It is clear that the radiator structure can be prearranged to support directly one or more of the afore-mentioned members, so that the radiator can be used on different models of motor vehicle and be adapted to different specific requirements.

It is also evident that, by virtue of the particular structure and arrangement described above, it is possible to assemble quickly and easily the sub-assembly consisting of the sub-frame, the power unit and the various members of the motor vehicle systems, and then proceed to install the sub-assembly in the body. Before installation in the body, the various components of the systems are joined together by couplings and hoses.

## Claims

1. Motor vehicle, including
a body (S),
a power unit (2),
a sub-frame (1) supported by the body (S) and carrying the power unit (2),
a series of members (4, 12, 15, 17, 21, 27), such as the engine cooling system, the system for cooling the engine lubricating oil, the air-conditioning system for the passenger compartment of the motor vehicle, the engine supercharging system, forming parts of the systems of the motor vehicle, among which is the radiator (4) of the engine cooling system, said radiator (4) being fixed to said sub-frame (1) characterised in that at least one of the remaining members of the motor vehicle systems are supported by the structure of the radiator (4).

2. Motor vehicle according to Claim 1, characterised in that the sub-frame (1) has a frame structure including a front cross member (2) carrying the radiator (4) of the engine cooling system, and in that the radiator (4) has a pair of end manifolds (9) each having a body with brackets or bosses for the fixing of a series of the said members forming parts of the motor vehicle systems.

3. Motor vehicle according to Claim 2, characterised in that one of the end manifolds (9) of the radiator (4) is provided with brackets or bosses for the fixing of a heat exchanger (15) for cooling the lubricating oil of the engine to one side of the radiator (4).

4. Motor vehicle according to Claim 2, characterised in that one of the end manifolds (9) of the radiator (4) is provided with brackets or bosses (16) for the fixing of a heat exchanger (12) for the supercharging air of the engine to one side of the radiator (4).

5. Motor vehicle according to Claim 2, characterised in that the end manifolds (9) of the radiator (4) are provided with brackets or bosses (16) for fixing a condenser (17), which forms part of the air-conditioning system of the motor vehicle directly in front of the radiator (4).

6. Motor vehicle according to Claim 2, characterised in that the end manifolds (9) of the radiator (4) are provided with brackets or bosses (16) for fixing a partition for conveying the cooling air towards the radiator (4) directly in front of the radiator (4).

7. Motor vehicle according to Claim 2, characterised in that the radiator (4) is provided with brackets or bosses (25) for the fixing of a structure (27) for supporting the cooling fan (28) of the radiator.

8. Motor vehicle according to Claim 2, characterised in that the front cross member (2) of the sub-frame (1) is provided with support brackets (3) having front ends projecting in a cantilever fashion from the front cross member (2) and each having a hole (6) engaged by a corresponding lower pin (7) of the radiator (4), with the interposition of a rubber bush (8).

## Patentansprüche

1. Kraftfahrzeug mit
einem Fahrzeugkörper (S),
einer Antriebseinheit (2),
einem von dem Fahrzeugkörper (S) gehaltenen Unterrahmen (1), der die Antriebseinheit (2) trägt, und einer Reihe von Aggregaten (4, 12, 15, 17, 21, 27), wie z.B. Motorkühlsystem, Kühlsystem für das Motoröl, System der Klimaanlage für den Fahrzeuginnenraum und Motor-Aufladesystem, die Bestandteils der Kraftfahrzeug-Systeme sind und unter denen sich der Radiator (4) des Motorkühlsystems befindet, der an dem genannten Unterrahmen (1) befestigt ist,
dadurch gekennzeichnet,
daß wenigstens eines der übringen Aggregate der Kraftfahrzeug-Systeme von der Struktur des Radiators (4) getragen ist.

2. Kraftfahrzeug nach Anspruch 1, dadurch gekennzeichnet, daß der Unterrahmen (1) eine Rahmenkonstruktion mit einem vorderen Querglied (2) aufweist, das den Radiator (4) des Motorkühlsystems trägt, und daß der Radiator (4) ein Paar stirnseitiger Sammelleitungen (9) aufweist, von denen jede einen Körper mit Bügeln oder Ansätzen für die Befestigung einer Reihe der genannten Aggregate umfassen, die Bestandteile der Kraftfahrzeug-Systeme sind.

3. Kraftfahrzeug nach Anspruch 2, dadurch gekennzeichnet, daß eine der stirnseitigen Sammelleitungen (9) des Radiators (4) Bügel oder Ansätze besitzt, um einen Wärmetauscher (15) für das Motoröl-Kühlsystem an der einen Seite des Radiators (4) zu befestigen.

4. Kraftfahrzeug nach Anspruch 2, dadurch gekennzeichnet, daß eine der stirnseitigen Sammelleitungen (9) des Radiators (4) Bügel oder Ansätzte (16) besitzt, um einen Wärmetauscher (12) für die Aufladungsluft des Motors an der einen Seite des Radiators (4) zu befestigen.

5. Kraftfahrzeug nach Anspruch 2, dadurch gekennzeichnet, daß die stirnseitigen Sammelleitungen (9) des Radiators (4) Bügel oder Ansätzte (16) besitzen, um einen Kondensator (17) direkt vor dem Radiator (4) zu befestigen, der Bestandteil der Klimaanlage des Kraftfahrzeugs ist.

6. Kraftfahrzeug nach Anspruch 2, dadurch gekennzeichnet daß die stirnseitigen Sammelleitungen (9) des Radiators (4) Bügel oder Ansätzte (16) besitzten, um eine Trennwandung für die Förderung von Kühlluft zu dem Radiator (4) direkt vor dem Radiator (4) zu befestigen.

7. Kraftfahrzeug nach Anspruch 2, dadurch gekennzeichnet, daß der Radiator (4) Bügel oder Ansätze (25) besitzt, um eine Konstruktion (27) zur Halterung des Kühlgebläses (28) des Radiators (4) zu befestigen.

8. Kraftfahrzeug nach Anspruch 2, dadurch gekennzeichnet, daß das Querglied (2) des Unterrahmens (1) Haltebügel (3) aufweist, deren vordere Enden von dem vorderen Querglied (2) wegragen und die jeweils eine Bohrung (6) besitzen, in die ein entsprechend angeordnet unterer Stift (7) des Radiators (4) unter Zwischenfügung einer Gummibuchse (8) eingreift.

**Revendications**

1. Véhicule automobile comprenant
une caisse (S),
un groupe moteur (2),
un sous-châssis (1) supporté par la caisse (S) et portant le groupe moteur (2),
une série d'éléments (4, 12, 15, 17, 21, 27), qui font partie des systèmes du véhicule automobile tels que le système de refroidissement du moteur, le système de refroidissement de l'huile de lubrification du moteur, le système de conditionnement d'air prévu pour l'habitacle du véhicule automobile, le système de suralimentation du moteur, parmi lesquels on trouve le radiateur (4) du système de refroidissement du moteur, ledit radiateur (4) étant fixé audit sous-châssis (1), caractérisé en ce qu'au moins un des éléments restants des systèmes du véhicule automobile est supporté par la structure du radiateur (4).

2. Véhicule automobile selon la revendication 1, caractérisé en ce que le sous-châssis (1) possède une ossature qui comprend une traverse avant (2) portant le radiateur (4) du système de refroidissement du moteur et en ce que le radiateur (4) comprend deux collecteurs d'extrémités (9) dont chacun possède un corps muni de ferrures ou de bossages prévus pour la fixation d'une série desdits éléments qui font partie des systèmes du véhicule automobile.

3. Véhicule automobile selon la revendication 2, caractérisé en ce que l'un des collecteurs d'extrémités (9) du radiateur (4) est muni de ferrures ou de bossages destinés à fixer sur un côté du radiateur (4) un échangeur de chaleur (15) destiné à refroidir l'huile de lubrification du moteur.

4. Véhicule automobile selon la revendication 2, caractérisé en ce que l'un des collecteurs d'extrémités (9) du radiateur (4) est muni de ferrures ou de bossages (16) destinés à fixer sur un côté du radiateur (4) un échangeur de chaleur (12) prévu pour l'air de suralimentation du moteur.

5. Véhicule automobile selon la revendication 2, caractérisé en ce que les collecteurs d'extrémités (9) du radiateur (4) sont munis de ferrures ou de bossages (16) destinés à fixer directement en avant du radiateur (4) un condenseur (17) qui fait partie du système de conditionnement d'air du véhicule automobile.

6. Véhicule automobile selon la revendication 2, caractérisé en ce que les collecteurs d'extrémités (9) du radiateur (4) sont munis de ferrures ou de bossages (16) destinés à fixer directement en avant du radiateur (4) une cloison servant à canaliser l'air de refroidissement vers le radiateur (4).

7. Véhicule automobile selon la revendication 2, caractérisé en ce que le radiateur (4) est muni de ferrures ou de bossages (25) destinés à fixer une structure (27) qui sert à supporter le ventilateur de refroidissement (28) du radiateur.

8. Véhicule automobile selon la revendication 2, caractérisé en ce que la traverse avant (2) du sous-châssis (1) est munie de ferrures supporte (3) possédant des extrémités avant qui font saillie en porte-à-faux sur la traverse avant (2) et dont chacune présente un trou (6) dans lequel un doigt inférieur correspondant (7) du radiateur (4) est engagé avec interposition d'une bague de caoutchouc (8).

FIG. 3

FIG. 1

4

8

7

2

III

S

0 178 266

FIG. 2

0 178 266